# EUROPÄISCHE PATENTSCHRIFT

(11) **EP 2 715 156 B1**
(45) Veröffentlichungstag und Bekanntmachung des Hinweises auf die Patenterteilung: **01.03.2017**
(21) Anmeldenummer: 12720513.6
(22) Anmeldetag: 15.05.2012
(51) Int. Cl.: F16B 15/00, F16B 35/04, E04B 1/76

(54) **SYSTEM ZUM BEFESTIGEN EINER DÄMMFASSADE UND DAFÜR VORGESEHENER BEFESTIGER**
SYSTEM FOR SECURING AN INSULATING FAÇADE AND SECURING MEANS PROVIDED THEREFOR
SYSTÈME DE FIXATION D'UNE FAÇADE ISOLANTE ET DISPOSITIF DE FIXATION PRÉVU À CET EFFET

(30) Priorität: 26.05.2011 DE 102011102510
(43) Veröffentlichungstag der Anmeldung: 09.04.2014
(73) Patentinhaber: SFS Intec Holding AG, 9435 Heerbrugg (CH)
(72) Erfinder: KORHONEN, Tero, S-73494 Strömsholm (SE)
(86) Internationale Anmeldenummer: PCT/EP2012/058975
(87) Internationale Veröffentlichungsnummer: WO 2012/159925

(56) Entgegenhaltungen:
- WO-A1-96/24732
- FR-A- 1 129 339
- US-A- 603 891
- US-A- 1 668 776
- US-A- 3 019 686

## Beschreibung

Die Erfindung bezieht sich auf ein System zum Befestigen einer Dämmfassade, die eine Dämmschicht und ein auf oder beabstandet von der Dämmschicht angeordnetes flächiges Fassadenelement umfasst, an einem im Wesentlichen vertikalen Unterbau aus Backstein, Beton, Leichtbeton, Metall oder Holz mit Hilfe von wenigstens einem gegen den Unterbau abwinkelbaren oder abgewinkelten Befestigungselement.

Ein ähnliches System, das aus dem Dokument EP 0 059 466 A1 bekannt ist, dient zum Aufbringen von Dämmputzen auf Altbau-Fassaden. Für diesen Zweck wird als flächiges Fassadenelement ein Putzträger in Form eines wellenartig verformten Gitters aus sich kreuzenden Stahldrähten eingesetzt, das mittels Befestigungselementen, die an den Wellentälern angreifen, an der Außenwand verankert wird und mit seinen hervorragenden Wellenscheiteln an dem Dämmputz trägt. Zwischen dem Putzträger und der Außenwand kann eine weitere Dämmschicht, z.B. aus Mineralwolle, vorgesehen sein, die gleichermaßen mit dem Putzträger an der Außenwand befestigt wird. Die Dämmfassade weist also hier eine Dämmschicht aus Mineralwolle und einer Außenschicht auf, die wiederum aus einem Dämmputz und einem Oberputz bestehen kann. Als Befestigungselemente dienen Dübel, die durch die Außenschicht in die Außenwand eingebracht sind, und Nägel oder Bolzen, die in die Dübel eingetrieben werden. Ferner umfassen die Befestigungselemente Distanzhalter, die die Dämmschicht durchgreifen und sich auf der Außenschicht abstützen. Ein wesentliches Problem, das in diesem Dokument nicht angesprochen ist, ist bei einer solchen Dämmfassade die sichere Aufnahme der durch diese auf das Befestigungssystem ausgeübten vertikalen Belastungen.

Heutige Lösungen zum Fixieren des Stahlnetzes bestehen darin, dass das Netz nur an dem Kopf der Befestiger fixiert wird. An einer Putzfassade gibt es jedoch eine laterale Belastung von der Putzschicht her von ungefähr 50 kg/m². Das führt oft zu dem Problem, dass sich die gesamte Putzschicht um einige Zentimeter nach unten verschiebt. Das wiederum verursacht Probleme durch Rissbildungen und Durchbiegungen in der Putzschicht. Der Befestiger, der bei heutigen Lösungen benutzt wird, muss deshalb starr sein, um in der Lage zu sein, die vertikalen Lasten tragen zu können. Das macht die Befestiger teuer.

Ein System der eingangs genannten Art ist in Verbindung mit einem Bauwerk mit hinterlüfteter Fassade aus dem Dokument DE 295 16 664 U1 bekannt. Das Bauwerk ist mit Distanzstücken verbunden, welche als längeneinstellbare Streben ausgebildet sind, deren eines Ende vermittels eines Kugelgelenkes mit einem in einen in der Frontfläche der Tragwand des Bauwerkes angeordneten Dübel eingreifenden Schraubbolzen gelenkig verbunden ist und deren anderes Ende mit die Fassadenelemente tragenden Gurten und/oder Gitterrosten verbunden ist. Die Streben sind nach Art eines Spannschlosses längenverstellbar ausgebildet, was durch eine Gewindespindel erreicht wird, die in eine geschlitzte, auffedernde Gewindebuchse eingreift, die nach Einstellung der gewünschten Länge beispielsweise durch Überschieben eines Ringes geschlossen wird. Eine solche Strebe, die längenverstellbar ausgebildet und mit einem Kugelgelenk versehen ist, ist ein aufwändiges und teures Bauteil.

Aus dem Dokument DE 24 53 895 A1 ist eine Vorrichtung zum justierbaren Befestigen von Fassadenplatten an einem Gebäude bekannt. Die dabei eingesetzten Befestigungselemente umfassen jeweils ein Tragseil, das mit einem Vorrichtungsteil an einer Fassadenplatte befestigt wird, und ein weiteres Vorrichtungsteil, das an einer Gebäudefront befestigt wird, die dafür eine Durchgangsbohrung aufweisen muss. Solche Befestigungselemente sind ebenfalls aufwändig und teuer.

Das Dokument DE 20 2006 017 536 U1 betrifft eine Vorrichtung zur sicheren Befestigung stoßgefährdeter Fassadenteile an Gebäuden. Dabei wird an eine mit einer Wärmedämmschicht versehene Gebäudewand eine Fassadenplatte mit Hilfe von federnden Befestigungsankern und federnden Trageankern angehängt, wobei sowohl der Trageanker als auch der Befestigungsanker an der Seitenfläche der Fassadenplatte befestigt sind. Der Trageanker wird an einer tragfähigen Wand mittels einer Schraube befestigt.

Ein weiteres gattungsgemäßes System, das Bauwerkfassaden betrifft, ist aus der WO 96/24732 A1 bekannt. Hier gelingt ein Befestigen einer Dämmfassade dadurch, dass Befestiger mittels Kugelgelenken abgewinkelt werden. Die WO 96/24732 A1 bedient sich also einer vergleichsweise komplexen Befestigertechnologie. Demgemäß besteht ein durch die vorliegende Erfindung zu lösendes Problem darin, ein Befestigungssystem der eingangs genannten Art weniger aufwändig und dabei flexibler einsetzbar zu gestalten, wobei trotzdem sicher verhindert werden soll, dass sich die Fassade nach unten verschieben kann.

Zur Lösung dieses Problems ist ein Befestigungssystem der eingangs genannten Art dadurch gekennzeichnet, dass das Befestigungselement oder wenigstens eines der Befestigungselemente ein schrauben- oder spikeartiger Befestiger ist, wobei der Befestiger an einem Ende mit einem Verankerungsabschnitt versehen ist, welcher in dem Unterbau verankerbar oder verankert ist, und wobei der Befestiger als ein gerader Befestiger ausgebildet ist, der nach dem Setzen nach unten gebogen wird und hierdurch abwinkelbar oder abgewinkelt ist, um mit dem Unterbau einen Winkel (α) von 30°- 60° und vorzugsweise von 45° zu bilden.

Weiter ist gemäß der vorliegenden Erfindung ein Befestiger für ein Dämmfassadenbefestigungssystem der vorgenannten Art dadurch gekennzeichnet, dass der Befestiger ein schrauben- oder spikeartiger Befestiger (30) ist, der als ein gerader Befestiger ausgebildet ist und nach dem Setzen gegen eine zu seiner Mittelachse (38) rechtwinkelige Ebene abwinkelbar oder abgewinkelt ausgebildet ist, um mit der Ebene einen Winkel (α) von 30° - 60° und vorzugsweise von 45° zu bilden.

Bei dem Befestigungssystem nach der Erfindung ist der Befestiger als ein gerader, nach dem Setzen abwinkelbarer Befestiger ausgebildet. Das ermöglicht, den Befestiger wie üblich herzustellen. Das Abwinkeln desselben erfolgt dann an Ort und Stelle in Abstimmung auf die vorhandene Dämmstoffschicht, in der sich der Befestiger nach dem Abwinkeln zur Gänze erstreckt. Ein so abgewinkelter Befestiger kann im Vergleich mit einem rechtwinkelig zu dem Unterbau angeordneten Befestiger vertikale Belastungen wesentlich besser aufnehmen, weil durch ihn ein sonst durch eine vertikale Belastung erzeugtes Biegemoment in eine Zugbeanspruchung des Befestigers umgewandelt wird. Die Zugfestigkeit eines langen Befestigers kleinen Durchmessers ist größer als dessen Biegefestigkeit. Ein großer Teil der vertikalen Belastungskräfte wird statt nach abwärts nach einwärts auf den Unterbau umgeleitet und so eines der in dem Stand der Technik vorhandenen Probleme auf einfache Weise gelöst.

Vorteilhafte Ausgestaltungen der Erfindung bilden die Gegenstände der abhängigen Ansprüche.

In einer Ausgestaltung des Systems nach der Erfindung ist wenigstens ein weiteres Befestigungselement ein Distanzhalter, der das Fassadenelement auf Abstand von dem Unterbau hält. Der Distanzhalter leitet die nach unten gerichteten vertikalen Belastungskräfte in Richtung Unterbau um und in den Unterbau ein.

In einer weiteren Ausgestaltung des Systems nach der Erfindung ist jeder Befestiger mit einem Kopf versehen, der mit einer Konsole, die an dem Fassadenelement befestigbar oder befestigt ist, in Eingriff bringbar und so durch eine vertikale Last des Fassadenelements im Wesentlichen auf Zug belastbar oder belastet ist. An der Konsole kann das flächige Fassadenelement, z.B. ein Putzträger, mit Schrauben befestigt werden oder eine Unterkonstruktion für einen äußeren Fassadenaufbau kann mit der Konsole verschraubt werden. Die Konsole ist den besonderen Bedingungen des äußeren Aufbaus angepasst und kann deshalb unterschiedliche Größen und Formen haben.

In einer weiteren Ausgestaltung des Systems nach der Erfindung ist die Konsole eine Lasche mit einem abgewinkelten Schenkel zur Halterung an dem Kopf des Befestigers und mit einem weiteren Schenkel zur Halterung an dem Fassadenelement und/oder dem Distanzhalter. Der Distanzhalter ist ein sich in vertikaler Richtung an den abgewinkelten Befestiger anschließendes Befestigungselement, das durch die über die Konsole übertragenen Kräfte auf Druck belastet wird.

In einer weiteren Ausgestaltung der Erfindung ist jeder Befestiger mit einem Distanzhalter gepaart, an dem die Konsole zusätzlich befestigbar oder befestigt ist. Über den Distanzhalter können Kräfte auf Grund vertikaler Belastung zum großen Teil nach innen auf den Unterbau umgeleitet werden, statt nach unten geleitet zu werden.

In einer weiteren Ausgestaltung des Systems nach der Erfindung umfasst die gegenseitige Befestigung der Konsole und des Fassadenelements sowie der Konsole und des Distanzhalters Befestigungsschrauben und Schnappbefestiger. Dieser Aufbau ermöglicht die angestrebte Kraftübertragung und -umlenkung auf den Unterbau auf einfache Weise und zu geringen Montagekosten.

In weiteren Ausgestaltungen des Systems nach der Erfindung ist der Verankerungsabschnitt des Befestigers mit einem Gewinde und gegebenenfalls mit einer Einschraubspitze oder mit einer Bohrspitze versehen. Zum Setzen des Befestigers wird dieser rechtwinkelig zu dem Unterbau durch die Dämmfassade hindurch montiert. Wenn ein Kraftschrauber zum Drehen eines mit Gewinde versehenen Befestigers eingesetzt wird, wird sich die Bohrspitze ein Loch in dem Unterbau bohren, welches ermöglicht, dass das Gewinde des Befestigers ein Gegengewinde in den Unterbau schneidet. Eine Bohrspitze ist aber nicht erforderlich. Eine Einschraubspitze ist ausreichend, wenn der Unterbau zum Beispiel aus Holz besteht. Mit einer Bohrspitze kann ohne Vorbohren der mit Gewinde versehene, also schraubenartig ausgebildete Befestiger in einem Unterbau aus Backstein, Beton, Leichtbeton oder Holz gesetzt werden. Ebenso kann der spikeartige Befestiger ohne oder mit Vorbohren durch Einschlagen gesetzt werden.

In einer weiteren Ausgestaltung des Systems nach der Erfindung ist der Befestiger angrenzend an den Verankerungsabschnitt mit einem Tiefenanschlag versehen. Durch den Tiefenanschlag wird vermieden, dass der Befestiger zu tief in den Unterbau eindringt. Wenn der Befestiger zu tief in den Unterbau eindringt, würde dadurch das Biegen oder Abwinkeln desselben behindert werden. Der Tiefenanschlag stellt sicher, dass der Befestiger immer in der richtigen Position ist, wenn das Setzen desselben beendet ist.

In einer weiteren Ausgestaltung des Systems nach der Erfindung weist der Befestiger einen Schaft auf, der in einem dem Gewinde benachbarten Bereich als ein Dehnschaft ausgebildet ist. Der Dehnschaft ermöglicht das Abwinkeln des Befestigers durch einfaches Biegen desselben unter plastischer Verformung.

In einer weiteren Ausgestaltung des Systems nach der Erfindung ist zur Bildung des Dehnschaftes der Schaft unmittelbar neben dem Tiefenanschlag auf der von dem Verankerungsabschnitt abgewandten Seite mit einer Einschnürung versehen. Es ist wichtig, dass die Einschnürung so nahe wie möglich bei dem Unterbau ist, wenn der Befestiger abgewinkelt wird, damit das richtige Endergebnis erzielt wird. Die richtige Position der Einschnürung wird durch den Tiefenanschlag gewährleistet. Die Einschnürung ist so nahe wie möglich bei dem Tiefenanschlag angeordnet. Die Einschnürung reduziert Zug- und Kompressionsbeanspruchung in dem Werkstoff, wenn der Befestiger gebogen wird.

Der Befestiger weist zur Erzielung der Abwinkelbarkeit einen als einen Dehnschaft ausgebildeten Schaft auf. Das erlaubt, wie oben bereits dargelegt, das Biegen des Schaftes des Befestigers unter plastischer Verformung und unter Vermeidung jeglicher Rissbildung in dem Befestiger. Zur Bildung des Dehnschaftes ist der Schaft mit einer Einschnürung versehen. Diese erleichtert das Abwinkeln des Schaftes unter plastischer Verformung.

In einer weiteren Ausgestaltung des Befestigers weist dieser einen Tiefenanschlag auf, neben dem der Schaft abwinkelbar oder abgewinkelt ist. Der Tiefenanschlag sorgt dafür, dass die Stelle, an der der Befestiger abgewinkelt wird, sich immer unmittelbar an dem Unterbau befindet.

Ausführungsbeispiele der Erfindung werden im Folgenden unter Bezugnahme auf die Zeichnungen näher beschrieben. Es zeigt
- Fig. 1: eine erste Ausführungsform eines erfindungsgemäßen Systems zum Befestigen einer Dämmfassade,
- Fig. 2: als eine Einzelheit einen bei dem Befestigungssystem eingesetzten schraubenartigen Befestiger,
- Fig. 3a - 3d: das Biegen des Befestigers nach Fig. 2 bei vorhandener Einschnürung (Fig. 3a und 3b) und bei nicht vorhandener Einschnürung (Fig. 3c und 3d),
- Fig. 4: eine zweite Ausführungsform des Systems nach der Erfindung,
- Fig. 5a - 5e: eine dritte Ausführungsform (Fig. 5a - 5d) und eine vierte Ausführungsform (Fig. 5e) des Systems nach der Erfindung
- Fig. 6: eine fünfte Ausführungsform des Systems nach der Erfindung und
- Fig. 7: eine sechste Ausführungsform des Systems nach der Erfindung.

Ein bei dem System nach der Erfindung einsetzbares Befestigungselement kann ein schraubenartiger Befestiger 30 oder ein spikeartiger Befestiger (nicht dargestellt) sein. Der spikeartige Befestiger unterscheidet sich von dem schraubenartigen Befestiger 30 lediglich dadurch, dass er kein Gewinde aufweist und statt mit einer Bohrspitze 32 mit einer Einschlagspitze versehen ist. Der Einfachheit halber werden im Folgenden nur Ausführungsbeispiele beschrieben, bei denen das abwinkelbare oder abgewinkelte Befestigungselement ein schraubenartiger Befestiger wie der dargestellte Befestiger 30 ist.

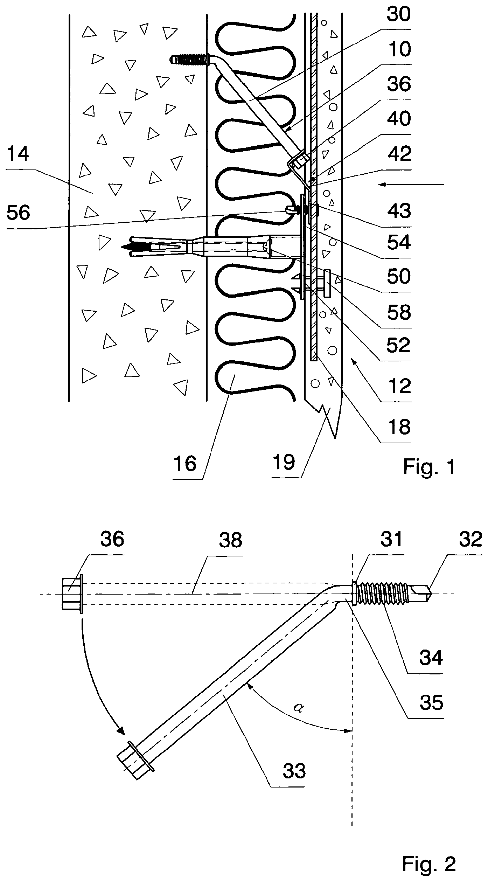

Fig. 1 zeigt in einer Schnittansicht eine erste Ausführungsform eines insgesamt mit 10 bezeichneten Befestigungssystems für eine Dämmfassade 12 auf einem üblicherweise vertikalen Unterbau 14. Der Unterbau 14 ist in Fig. 1 als eine Wand aus Beton oder Leichtbeton angedeutet. Es könnte sich auch um eine Wand aus Backstein, Metall, Holz oder anderem Material handeln. Die Dämmfassade 12 umfasst eine Dämmschicht 16 und ein auf der Dämmschicht angeordnetes flächiges Fassadenelement 18. Die Dämmfassade könnte auch hinterlüftet sein. In diesem Fall wäre das flächige Fassadenelement 18 nicht auf der Dämmschicht 16, sondern beabstandet von der Dämmschicht 16 angeordnet. Die Ausführung der Dämmfassade als hinterlüftete Fassade ist in den Zeichnungen der Einfachheit halber ebenfalls nicht dargestellt. In dem Ausführungsbeispiel nach Fig. 1 ist das Fassadenelement 18 ein Putzträger, der eine Putzschicht 19 trägt. Das Befestigungssystem 10 umfasst wenigstens ein Befestigungselement in Form des bereits erwähnten schraubenartigen Befestigers 30 und eine zugeordnete Konsole 40. Der schraubenartige Befestiger 30 ist im Einsatz gegen den Unterbau 14 abgewinkelt, wie es in Fig. 1 gezeigt ist. Wenn das flächige Fassadenelement 18 ein Drahtgitter wäre, das in regelmäßigen Abständen wellenartig verformt ist, wie es aus dem eingangs erwähnten Dokument EP 0 059 466 A1 bekannt ist, könnte der Befestiger 30 an einer Wellenflanke des Drahtgitters, die die entsprechende Neigung aufweist, auch direkt, also ohne eine zwischengeschaltete Konsole befestigt werden.

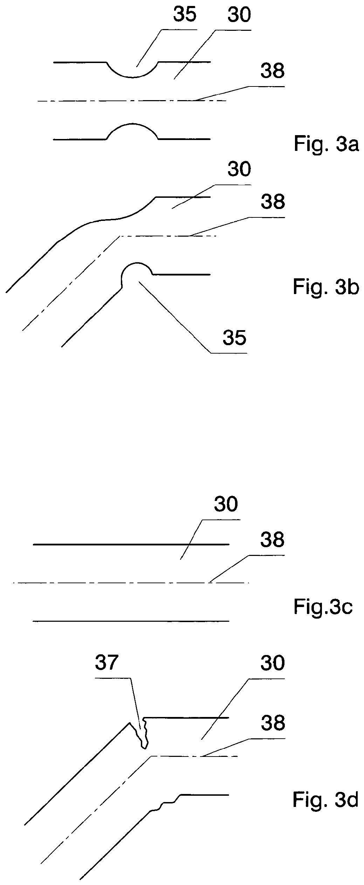

Der Befestiger 30 wird unter Bezugnahme auf die Fig. 2 und 3a - 3d näher betrachtet. Der Befestiger 30 ist im Ausgangszustand gerade, also unabgewinkelt, wie es in Fig. 2 gestrichelt angedeutet ist. Zum Setzen des Befestigungers 30 wird dieser im rechten Winkel zu dem Unterbau 14 durch die Dämmschicht 16 hindurch auf den Unterbau 14 aufgesetzt und in den Unterbau eingedreht. Bei der in Fig. 2 gezeigten Ausführungsform hat der Befestiger 30 einen Verankerungsabschnitt, der in einer Bohrspitze 32 endet. Zum Setzen des Befestigers 30 wird üblicherweise ein Kraft- oder Elektroschrauber verwendet. Mit der Bohrspitze 32 bohrt der Befestiger 30 ein Loch in den Unterbau 14. Anschließend an die Bohrspitze 32 ist der Befestiger 30 mit einem Gewinde 34 versehen. An seinem zu der Bohrspitze 32 entgegengesetzten Ende hat der Befestiger 30 einen Kopf 36. Das Gewinde 34 kann sich während des Setzvorganges in dem Unterbau 14 ein Gegengewinde selbst schneiden. Das Gewinde 34 ist so ausgebildet, dass es sich in dem in dem Unterbau gebildeten Loch, in das der Befestiger 30 eingeschraubt wird, ein Gewinde schneidet, welches einen hohen Ausziehwiderstand erzeugt. Der Befestiger 30 kann statt mit einer Bohrspitze einfach auch mit einer Einschraubspitze versehen sein. In diesem Fall kann der Befestiger 30 ohne Vorbohren gesetzt werden, was z.B. bei einem Unterbau 14 aus Leichtbeton oder Holz ohne Weiteres möglich ist.

Der Befestiger 30 könnte nicht nur als ein Spike, wie oben erwähnt, sondern auch als eine Gewindestange ausgebildet sein (nicht dargestellt). In diesem Fall würde der Kopf 36 einfach durch eine Mutter ersetzt werden.

Der Befestiger 30 hat einen Tiefenanschlag 31. Der Tiefenanschlag 31 verhindert, dass der Befestiger 30 zu weit in den Unterbau 14 eindringt. Ein gewindeloser Schaftabschnitt 33, der sich zwischen dem Tiefenanschlag 31 und dem Kopf 36 erstreckt, hat unmittelbar neben dem Tiefenanschlag 31 eine Einschnürung 35. Wenn der Befestiger 30 gesetzt worden ist, wird er abgewinkelt, d.h. in die in Fig. 2 dargestellte Stellung nach unten gebogen, um einen Winkel α in einem Bereich von 30°- 60° und vorzugsweise von 45° mit einer zu seiner Mittelachse 38 rechtwinkeligen Ebene, also mit dem Unterbau 14 zu bilden. Bei Bedarf kann dafür ein vertikaler Schnitt in der Dämmschicht 16 mit einem Messer oder einem ähnlichen Werkzeug gemacht werden, um das Biegen durch den Dämmstoff nicht zu behindern. Wenn der schraubenartige Befestiger 30 um den Winkel α von 30°- 60° gegen den Unterbau 14 abgebogen worden ist, sich also in einer in Fig. 2 mit ausgezogenen Linien dargestellten Stellung befindet, werden die vertikalen Belastungen von einer äußeren Konstruktion aus, z.B. einem Regengitter oder einem anderen flächigen Fassadenelement 18, durch die Schraube besser aufgenommen, verglichen mit einem Winkel von 90° zwischen dem Befestiger 30, also dem unabgewinkelten Befestiger 30 und dem Unterbau 14. Wenn der schraubenartige Befestiger 30 um den Winkel α von 30° - 60° abgebogen wird, wird die vertikale Belastung aus einem Biegemoment in eine auf den Befestiger 30 ausgeübte Zugspannung umgeformt.

Der Tiefenanschlag 31 gewährleistet, dass der Befestiger 30 immer in der richtigen Position ist, wenn das Setzen des Befestigers 30 beendet ist. Es ist wichtig, dass sich die Einschnürung 35 dann so nahe wie möglich bei dem Unterbau 14 befindet. Die Einschnürung 35 reduziert die Zug- und Druckbeanspruchung in dem Werkstoff, wenn der Befestiger 30 in die in Fig. 2 gezeigte Stellung gebogen wird. Die Einschnürung 35 verhindert so, dass sich in diesem Bereich ein Riss 37 bildet. Dieser würde sich ergeben, wenn der Befestiger 30 nicht die Einschnürung 35 hätte, wie es in den Fig. 3c und 3d angedeutet ist. Ohne die Einschnürung 35 könnte die Zugspannung an der oberen Seite des gebogenen Bereiches zu groß werden, weil der dazu entgegengesetzte Bereich (in Fig. 3d unten) nicht zusammengedrückt werden kann. Das Zusammendrücken ist aber möglich, wenn die Einschnürung 35 vorhanden ist. Wenn der untere Bereich bei einer Biegebewegung nicht zusammengedrückt werden kann, wird die obere Seite des Biegebereiches so überdehnt, dass sich der Riss 37 in dem Werkstoff bilden kann. Die Einschnürung 35 reduziert deshalb die Spannung in dem Biegebereich und verhindert eine Rissbildung, wie es die Fig. 3a und 3b veranschaulichen.

Wenn der Befestiger 30 um den gewünschten Winkel α gebogen worden ist, ist er besser in der Lage, vertikale Belastungen von der Dämmfassade 12 aufzunehmen als in einem Zustand, in welchem es mit dem Unterbau 14 einen rechten Winkel bildet. Das Biegemoment, welches durch die Dämmfassade 12 auf das horizontal angeordnete Befestigungselement 30 ausgeübt werden würde, wird im Wesentlichen als eine Zugspannung auf den abgewinkelten Befestiger 30 ausgeübt. Die Zugfestigkeit eines langen Befestigers kleinen Durchmessers ist aber höher als dessen Biegefestigkeit. Die Kraftübertragung von der Dämmfassade 12 auf den Befestiger 30 erfolgt mit Hilfe der Konsole 40, die an dem Kopf 36 des Befestigers 30 angreift.

Die Konsole 40 ist eine Lasche z.B. aus Blech, mit einem abgewinkelten Schenkel 42, welcher mit dem Fassadenelement 18 den gleichen Winkel wie der Befestiger 30 mit dem Unterbau 14 bildet. In dem in Fig. 1 gezeigten Ausführungsbeispiel ist der Schenkel 42 an seinem Ende selbst rechtwinkelig abgebogen und hat eine Öffnung, die den Schaftabschnitt 33 des Befestigers 30 so aufnimmt, dass der Kopf 36 im Einsatz, wie er in Fig. 1 gezeigt ist, an der Unterseite des rechtwinkelig abgebogenen Endes anliegt, so dass über die Konsole 40 Zug auf den Befestiger 30 ausübbar ist. Ein weiterer, unabgewinkelter Schenkel 43 der Konsole 40 ist an dem Fassadenelement 18 befestigt. Wenn die Dämmschicht 16 eine ausreichende Festigkeit hat, um Druck von der Dämmfassade 12 her aufnehmen zu können, würde die Befestigung der Dämmfassade 12 an dem Unterbau 14 mit abgewinkelten Befestigern 30 ausreichen. Es ist selbstverständlich eine große Anzahl solcher Befestiger 30 an einer Dämmfassade im Einsatz. In Fig. 1 ist nur einer dieser abgewinkelten Befestiger 30 sichtbar.

Wenn ein Distanzhalter 50 wie in Fig. 1 vorhanden ist, der einen Dübel 52 mit einem großen Kopf 54 umfasst, wie er üblicherweise oder bislang im Stand der Technik zur Befestigung eines flächigen Fassadenelementes an einem Unterbau eingesetzt wird, so wird zweckmäßig der Befestiger 30 über die Konsole 40 mittels einer Schraube 56 mit dem Dübel 52 verbunden, so dass die Kraft über den Distanzhalter 50 in den Unterbau 14 abgeleitet wird. Zusätzlich kann der Kopf 54 des Dübels 52 mit dem Fassadenelement 18 durch einen Schnappbefestiger 58 verbunden werden. Nachdem diese Verbindungen mit dem Fassadenelement 18 hergestellt worden sind, wird die Putzschicht 19 auf das Fassadenelement 18 aufgetragen.

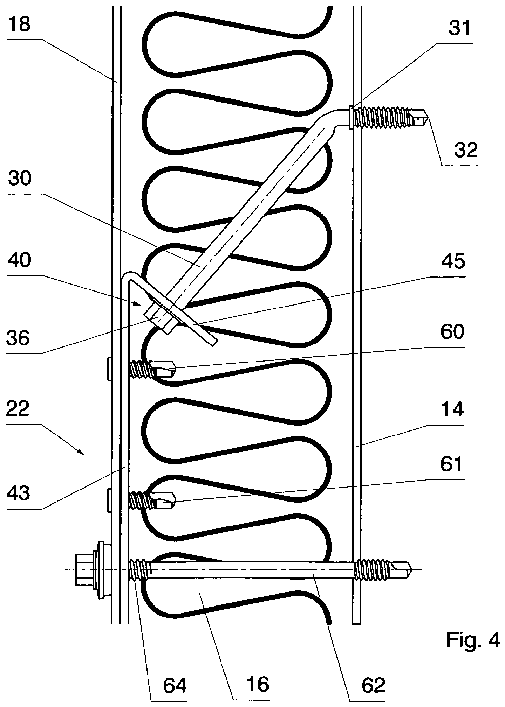

Fig. 4 zeigt eine zweite Ausführungsform des Befestigungssystems nach der Erfindung, das insgesamt mit 22 bezeichnet ist. Das Befestigungssystem 22 wird eingesetzt, wenn das Fassadenelement 18 den äußeren Teil der Dämmfassade 12 bildet, also keine Putzschicht aufgetragen wird. Zusätzlich kann wie hier in Fig. 4 die Befestigung der Dämmfassade 12 an einem flächigen metallischen Untergrund 14 statt an einem Unterbau wie einer Wand aus Beton, Leichtbeton oder Holz erfolgen. Bei dem Befestigungssystem 22 hat die Konsole 40 nur einen abgewinkelten Schenkel 45. Der andere, unabgewinkelte Schenkel 43 ist mit dem Fassadenelement 18 mittels Schrauben 60, 61 verbunden. Zusätzlich wird die Konsole 40 auf dem Unterbau 14 durch eine Distanzschraube 62 abgestützt, die an einem Ende ein Gewinde zur Verankerung in dem Unterbau 14 und am anderen Ende unter dem Kopf ein Stützgewinde 64, auf dem sich die Konsole 40 und das Fassadenelement 18 abstützen, hat.

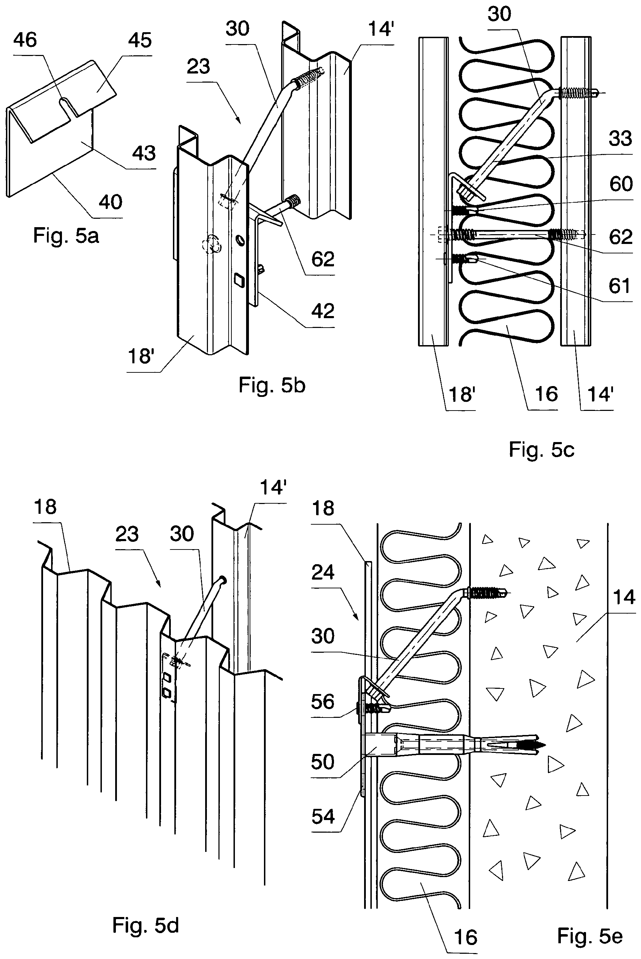

Die Fig. 5a - 5d zeigen eine dritte Ausführungsform des Befestigungssystems nach der Erfindung, das insgesamt mit 23 bezeichnet ist. Das Befestigungssystem 23 dient zur Befestigung eines Fassadenelements 18, das wie in Fig. 5d als ein Trapezblech ausgebildet ist, auf einem Unterbau, der hier ein metallisches Profilteil 14' umfasst. Das Fassadenelement 18 kann statt als ein Trapezblech wie in Fig. 5d auch einfach als ein metallisches Profilteil 18' wie in Fig. 5b ausgebildet sein.

In der Seitenansicht in Fig. 5c ist zu erkennen, dass die Konsole 40 an dem Fassadenelement 18' im Wesentlichen so wie die Konsole 40 an dem Fassadenelement 18 in Fig. 4 befestigt ist, nämlich mit Hilfe von zwei Schneidschrauben 60, 61 und einer Distanzschraube 62. Der Befestiger 30 ist in gleicher Position wie in Fig. 4 angeordnet. Die Konsole 40 hat gemäß Fig. 5a einen Schlitz 46 zur Aufnahme des Schaftabschnittes 33. Den gleichen Schlitz hat auch die Konsole 40 in Fig. 4. In Fig. 5b ist zu erkennen, dass die Distanzschraube 62 nur mit der Konsole 40 verbunden ist, die ihrerseits mittels der Schrauben 60, 61 mit dem metallischen Profilteil 18' verbunden ist.

Fig. 5e zeigt eine vierte Ausführungsform des Befestigungssystems nach der Erfindung, das insgesamt mit 24 bezeichnet ist. Das Fassadenelement 18 ist mit dem Unterbau 14 durch einen Distanzhalter 50 verbunden, wie er bereits mit Bezug auf Fig. 1 beschrieben worden ist. Der Kopf 54 des Distanzhalters 50 ist mit dem Fassadenelement 18 verschraubt und gleichzeitig mit einer Konsole 40, deren Anordnung der nach Fig. 5c entspricht. Ebenso wie dort erfolgt die Ableitung einer auf den Befestiger 30 ausgeübten Vertikalbelastung, soweit sie nicht als Zugbelastung aufgenommen wird, als eine Druckkraft direkt in den Unterbau 14.

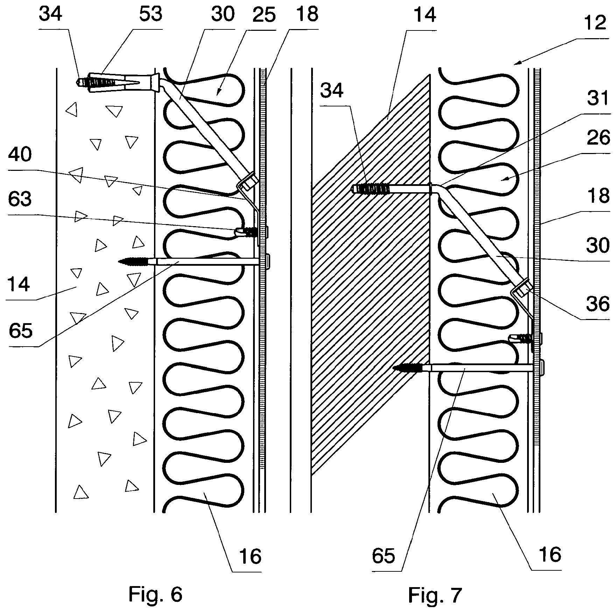

Fig. 6 zeigt eine fünfte Ausführungsform des Befestigungssystems nach der Erfindung, das insgesamt mit 25 bezeichnet ist. In dieser Ausführungsform ist der Befestiger 30 in dem Unterbau 14 mit Hilfe eines Dübels 53 befestigt, so dass der Befestiger keine Bohrspitze benötigt. Die Konsole 40 ist mittels einer Schraube 63 direkt an dem Fassadenelement 18 befestigt. Unmittelbar daneben ist das Fassadenelement 18 über eine Distanzschraube 65 direkt auf dem Unterbau 14 abgestützt.

Fig. 7 zeigt eine sechste Ausführungsform des Befestigungssystems nach der Erfindung, das insgesamt mit 26 bezeichnet ist. Das Befestigungssystem 26 dient zur Befestigung einer Dämmfassade 12 auf einem Unterbau 14 aus Holz.

Der Befestiger 30 wird hier zweckmäßig in ein vorgebohrtes Loch eingeschraubt, bevor er in die in Fig. 7 gezeigte Position abgebogen wird. Die Konsole 40 ist so wie bei dem Befestigungssystem 25 an dem Fassadenelement 18 befestigt. Letzteres ist ebenfalls unmittelbar daneben durch eine Distanzschraube 65 direkt auf dem Unterbau 14 abgestützt.

Fig. 1 zeigt die Verwendung des Befestigungssystems 10 in Verbindung mit einem äußeren Putzfassadensystem mit einer Putzschicht 19. Nachdem der schraubenartige Befestiger 30 gesetzt und unter dem Winkel α von 30° - 60° gegen den Unterbau abgebogen worden ist, werden die vertikalen Belastungen von dem äußeren Putzfassadensystem durch den so abgewinkelten Befestiger 30 besser aufgenommen, verglichen mit einem unter einem Winkel von 90° gegen den Unterbau 14 abgebogenen Befestiger 30.

Nachdem der Befestiger 30 gesetzt und dann in die endgültige Position gebogen worden ist, wird eine Konsole 40 an dem Kopf 36 des Befestigers 30 befestigt. Ein Putzträger wie der Distanzhalter 50 wird auf dem Unterbau 14 unmittelbar neben der Konsole 40 befestigt. Die Konsole 40 wird an dem Kopf 54 des Distanzhalters 50 befestigt, was mit den Schrauben 56 und/oder den Schnappbefestigern 58 erfolgen kann. Die Konsole 40 ist dem Befestiger 30 angepasst und kann deshalb unterschiedliche Größen und Formen haben.

Nach dem Abwinkeln des Befestigers 30 und dem Befestigen desselben an dem Distanzhalter 50 wird als das Fassadenelement 18 ein Stahl-, Kunststoff-, Glasfaser- oder anderer Typ von Befestigungsnetz 22 an der Konsole 40 und/oder dem Distanzhalter 50 mit den Schrauben 56 und den Schnappbefestigern 58 befestigt. Das so geschaffene vollständige System bewirkt in Wechselwirkung mit den abgewinkelten Befestigern 30, dass die vertikalen Belastungen aufgenommen werden, die von dem Gewicht der Dämmfassade 12 einschließlich des Fassadenelements 18 und der Putzschicht 19 herrühren. Das verhindert, dass sich die Dämmfassade 12 nach unten verschieben kann.

### Bezugszeichenliste

- 10: Befestigungssystem (1. Ausführungsform)
- 12: Dämmfassade
- 14: Unterbau
- 14': metallisches Profilteil
- 16: Dämmschicht
- 18: Fassadenelement
- 19: Putzschicht
- 22: Befestigungssystem (2. Ausführungsform)
- 23: Befestigungssystem (3. Ausführungsform)
- 24: Befestigungssystem (4. Ausführungsform)
- 25: Befestigungssystem (5. Ausführungsform)
- 26: Befestigungssystem (6. Ausführungsform)
- 30: schrauben- oder spikeartiger Befestiger
- 31: Tiefenanschlag
- 32: Bohrspitze
- 33: Schaftabschnitt
- 34: Gewinde
- 35: Einschnürung
- 36: Kopf
- 37: Riss
- 38: Mittelachse
- 40: Konsole
- 42: abgewinkelter Schenkel
- 43: unabgewinkelter Schenkel
- 45: abgewinkelter Schenkel
- 46: Schlitz
- 50: Distanzhalter
- 52: Dübel
- 53: Dübel
- 54: Kopf
- 56: Schraube
- 58: Schnappbefestiger
- 60: Schraube
- 61: Schraube
- 62: Distanzschraube
- 63: Schraube
- 64: Stützgewinde
- 65: Distanzschraube
- α: Winkel

## Patentansprüche

1. System zum Befestigen einer Dämmfassade, die eine Dämmschicht und ein auf oder beabstandet von der Dämmschicht angeordnetes flächiges Fassadenelement umfasst, an einem im Wesentlichen vertikalen Unterbau aus Backstein, Beton, Leichtbeton, Metall oder Holz mit Hilfe von wenigstens einem gegen den Unterbau abwinkelbaren oder abgewinkelten Befestigungselement,
wobei das Befestigungselement oder wenigstens eines der Befestigungselemente ein schrauben- oder spikeartiger Befestiger (30) ist,
wobei der Befestiger (30) an einem Ende mit einem Verankerungsabschnitt versehen ist, welcher in dem Unterbau (14) verankerbar oder verankert ist, und
**dadurch gekennzeichnet, dass**
der Befestiger (30) als ein gerader Befestiger ausgebildet ist, der nach dem Setzen nach unten gebogen wird und hierdurch abwinkelbar oder abgewinkelt ist, um mit dem Unterbau (14) einen Winkel (α) von 30°-60° und vorzugsweise von 45° zu bilden.

2. System nach Anspruch 1, **dadurch gekennzeichnet, dass** wenigstens ein weiteres Befestigungselement ein Distanzhalter (50) ist, der das Fassadenelement (18) auf Abstand von dem Unterbau (14) hält.

3. System nach Anspruch 2, **dadurch gekennzeichnet, dass** jeder Befestiger mit einem Kopf versehen ist, der mit einer Konsole (40), die an dem Fassadenelement (18) befestigbar oder befestigt ist, in Eingriff bringbar und so durch eine vertikale Last des Fassadenelements (18) im Wesentlichen auf Zug belastbar oder belastet ist.

4. System nach Anspruch 3, **dadurch gekennzeichnet, dass** die Konsole (40) eine Lasche mit einem abgewinkelten Schenkel (42) zur Halterung an dem Kopf (36) des Befestigers (30) und mit einem weiteren Schenkel (43) zur Halterung an dem Fassadenelement (18) und/oder dem Distanzhalter (50) ist.

5. System nach Anspruch 4, **dadurch gekennzeichnet, dass** jeder Befestiger (30) mit einem Distanzhalter (50) gepaart ist, an dem die Konsole (40) zusätzlich befestigbar oder befestigt ist.

6. System nach Anspruch 5, **dadurch gekennzeichnet, dass** die gegenseitige Befestigung der Konsole (40) und des Fassadenelements (18) sowie der Konsole (40) und des Distanzhalters (50) Befestigungsschrauben und Schnappbefestiger (58) umfasst.

7. System nach einem der vorhergehenden Ansprüche, **dadurch gekennzeichnet, dass** der Verankerungsabschnitt des Befestigers (30) mit einem Gewinde (34) versehen ist.

8. System nach Anspruch 7, **dadurch gekennzeichnet, dass** der Verankerungsabschnitt des Befestigers (30) mit einer Einschraubspitze oder mit einer Bohrspitze (32) versehen ist.

9. System nach einem der vorhergehenden Ansprüche, **dadurch gekennzeichnet, dass** jeder Befestiger (30) angrenzend an den Verankerungsabschnitt mit einem Tiefenanschlag (31) versehen ist.

10. System nach einem der vorhergehenden Ansprüche, **dadurch gekennzeichnet, dass** der Befestiger (30) einen Schaft (33) aufweist, der in einem dem Verankerungsabschnitt benachbarten Bereich als ein Dehnschaft ausgebildet ist.

11. System nach den Ansprüchen 9 und 10, **dadurch gekennzeichnet, dass** zur Bildung des Dehnschafts der Schaft (33) unmittelbar neben dem Tiefenanschlag (31) auf der von dem Verankerungsabschnitt abgewandten Seite mit einer Einschnürung (35) versehen ist.

12. Befestiger für ein Dämmfassadenbefestigungssystem nach einem der vorhergehenden Ansprüche,
wobei
der Befestiger ein schrauben- oder spike-artiger Befestiger (30) ist, **dadurch gekennzeichnet, dass** der Befestiger
als ein gerader Befestiger ausgebildet ist und nach dem Setzen nach unten gebogen wird und hierdurch gegen eine zu seiner Mittelachse (38) rechtwinkelige Ebene abwinkelbar oder abgewinkelt ausgebildet ist, um mit der Ebene einen Winkel (α) von 30° - 60° und vorzugsweise von 45° zu bilden;
wobei zur Erzielung der Abwinkelbarkeit der Befestiger (30) einen als einen Dehnschaft ausgebildeten Schaft (33) aufweist; und
wobei zur Bildung des Dehnschaftes der Schaft (33) mit einer Einschnürung (35) versehen ist.

13. Befestiger nach Anspruch 12, **dadurch gekennzeichnet, dass** der Befestiger (30) einen Tiefenanschlag (31) aufweist, neben dem der Schaft (33) abwinkelbar oder abgewinkelt ist.

## Claims

1. System for fastening an insulating facade, which comprises an insulating layer and a planar facade element that is arranged on or spaced apart from the insulating layer, to a substantially vertical substructure made of brick, concrete, light concrete, metal or wood using at least one fastening element that is or can be bent relative to the substructure,
the fastening element or at least one of the fastening elements being a screw-like or spike-like fastener (30),
the fastener (30) being provided at one end with an anchoring portion which is or can be anchored in the substructure (14), and
**characterised in that**
the fastener (30) is formed as a straight fastener which, after being placed, is bent downwards and as a result is or can be bent in order to form an angle (α) of between 30° and 60°, and preferably of 45°, together with the substructure (14).

2. System according to claim 1, **characterised in that** at least one additional fastening element is a spacer (50) which keeps the facade element (18) at a spacing from the substructure (14).

3. System according to claim 2, **characterised in that** each fastener is provided with a head which can be brought into engagement with a bracket (40), which is or can be fastened to the facade element (18), and is or can thus be substantially subjected to tensile load by a vertical load of the facade element (18).

4. System according to claim 3, **characterised in that** the bracket (40) is a tab having a bent leg (42) for mounting on the head (36) of the fastener (30) and having another leg (43) for mounting on the facade element (18) and/or the spacer (50).

5. System according to claim 4, **characterised in that** each fastener (30) is paired with a spacer (50), to which the bracket (40) is or can be additionally fastened.

6. System according to claim 5, **characterised in that** the bracket (40) and the facade element (18) are fastened to one another and the bracket (40) and the spacer (50) are fastened to one another by means of fastening screws and snap-in fasteners (58).

7. System according to any of the preceding claims, **characterised in that** the anchoring portion of the fastener (30) is provided with a thread (34).

8. System according to claim 7, **characterised in that** the anchoring portion of the fastener (30) is provided with a screw bit or a boring bit (32).

9. System according to any of the preceding claims, **characterised in that** each fastener (30) is provided with a depth stop (31) adjacently to the anchoring portion.

10. System according to any of the preceding claims, **characterised in that** the fastener (30) comprises a shank (33) which is formed as a reduced shank in a region adjacent to the anchoring portion.

11. System according to either claim 9 or claim 10, **characterised in that**, for forming the reduced shank, the shank (33) is provided with a constriction (35) directly adjacently to the depth stop (31) on the side facing away from the anchoring portion.

12. Fastener for an insulating facade fastening system according to any of the preceding claims,
the fastener being a screw-like or spike-like fastener (30), **characterised in that** the fastener is formed as a straight fastener and, after being placed, is bent downwards and as a result is or can be bent relative to a plane that is at a right angle to the central axis (38) thereof in order to form an angle (α) of between 30° and 60°, and preferably of 45°, together with the plane;
the fastener (30) comprising a shank (33) formed as a reduced shank in order to achieve the bendability; and
the shank (33) being provided with a constriction (35) in order to form the reduced shank.

13. Fastener according to claim 12, **characterised in that** the fastener (30) comprises a depth stop (31), adjacent to which the shank (33) is or can be bent.

## Revendications

1. Système de fixation d'une façade isolante comprenant une couche isolante et un élément de façade plan situé sur ou à distance de cette couche isolante sur une infrastructure essentiellement verticale en briques, en béton, en béton léger, en métal ou en bois à l'aide d'un élément de fixation pouvant être plié ou plié par rapport à l'infrastructure, dans lequel l'élément de fixation ou au moins l'un des éléments de fixation est une attache de type vis ou crampon (30), cette attache (30) étant équipée à une extrémité d'un segment d'ancrage pouvant être ancré ou ancré dans l'infrastructure (14),
**caractérisé en ce que**
l'attache (30) est réalisée sous la forme d'une attache linéaire qui, après sa mise en place est repliée vers le bas et est ainsi coudée ou peut ainsi être coudée pour former avec l'infrastructure (14) un angle (a) de 30°-60° et de préférence de 45°.

2. Système conforme à la revendication 1,
**caractérisé en ce qu'**
au moins un autre élément de fixation est un écarteur (50) qui maintient l'élément de façade (18) à distance de l'infrastructure (14).

3. Système conforme à la revendication 2,
**caractérisé en ce que**
chaque attache est équipée d'une tête pouvant être mise en prise avec une console (40) qui peut être fixée ou est fixée à l'élément de façade (18) et est ainsi chargée ou peut ainsi être chargée essentiellement en traction par la charge verticale de l'élément de façade (18).

4. Système conforme à la revendication 3,
**caractérisé en ce que**
la console (40) est une languette ayant une branche coudée (42) pour permettre son maintien sur la tête (36) de l'attache (30) et une autre branche (43) pour permettre son maintien sur l'élément de façade (18) et/ou l'écarteur (50).

5. Système conforme à la revendication 4,
**caractérisé en ce que**
chaque attache (30) est accouplée avec un écarteur (50) sur lequel la console (40) est en outre fixée ou peut en outre être fixée.

6. Système conforme à la revendication 5,
**caractérisé en ce que**
la fixation mutuelle de la console (40) et de l'élément de façade (18) ainsi que de la console (40) et de l'écarteur (50) comprend des vis de fixation et des attaches à déclic (58).

7. Système conforme à l'une des revendications précédentes,
**caractérisé en ce que**
le segment d'ancrage de l'attache (30) est équipé d'un filetage (34).

8. Système conforme à la revendication 7,
**caractérisé en ce que**
le segment d'ancrage de l'attache (30) est équipé d'une pointe visseuse ou d'une pointe foreuse (32).

9. Système conforme à l'une des revendications précédentes,
**caractérisé en ce que**
chaque attache (30) est équipée d'une butée de profondeur (31) au voisinage du segment d'ancrage.

10. Système conforme à l'une des revendications précédentes,
**caractérisé en ce que**
l'attache (30) comporte une tige (33) qui est réalisée sous la forme d'une tige allégée dans la zone voisine du segment d'ancrage.

11. Système conforme aux revendications 9 et 10,
**caractérisé en ce que**
pour former la tige allégée, la tige (33) est équipée d'un étranglement (35) à proximité immédiate de la butée de profondeur (31) du côté situé à l'opposé du segment d'ancrage.

12. Attache destinée à un système de fixation de façades isolantes conforme à l'une des revendications précédentes, dans lequel l'attache est une attache (30) de type vis ou crampon,
**caractérisée en ce que**
l'attache est réalisée sous la forme d'une attache linéaire, et après sa mise en place est repliée vers le bas et est ainsi réalisée de façon à pouvoir être coudée ou à être coudée par rapport à un plan perpendiculaire à son axe médian (38) pour former avec ce plan un angle (a) de 30° à 60° et de préférence de 45°,
et, pour obtenir la possibilité de coudage, l'attache (30) comprend une tige (33) réalisée sous la forme d'une tige allégée, et
pour former la tige allégée, la tige (33) est équipée d'un étranglement (35).

13. Attache conforme à la revendication 12,
**caractérisée en ce qu'**
elle comporte une butée de profondeur (31) à proximité de laquelle la tige (33) peut être coudée ou est coudée.
